# FASCICULE DE BREVET EUROPEEN

(11) **EP 1 457 622 B1**
(45) Date de publication et mention de la délivrance du brevet: **12.07.2006**
(21) Numéro de dépôt: 04290572.9
(22) Date de dépôt: 03.03.2004
(51) Int. Cl.: E04H 9/02, E04H 9/14

(54) **Procédé et système de stabilisation d'un édifice**
Verfahren und Vorrichtung zum Stabilisieren eines Gebäudes
Method and device for the stabilisation of a building

(30) Priorité: 13.03.2003 FR 0303128
(43) Date de publication de la demande: 15.09.2004
(60) Demande divisionnaire: 05290564.3
(73) Titulaire: M. Lefevre S.A., 75008 Paris (FR)
(72) Inventeur: Menard, Marc-Henry, 75008 Paris (FR)
(74) Mandataire: Dossmann, Gérard

(56) Documents cités:
- US-A- 4 956 947
- US-A- 4 964 246
- US-A- 5 062 765
- PATENT ABSTRACTS OF JAPAN vol. 1999, no. 02, 26 février 1999 (1999-02-26) -& JP 10 292665 A (TAISEI CORP), 4 novembre 1998 (1998-11-04)
- PATENT ABSTRACTS OF JAPAN vol. 2000, no. 16, 8 mai 2001 (2001-05-08) -& JP 2001 011939 A (TODA IKUYA), 16 janvier 2001 (2001-01-16)

## Description

La présente invention concerne le domaine de la stabilisation de structures de construction en maçonnerie, en bois, en métal ou autre. L'invention s'applique aux constructions anciennes, récentes ou neuves.

Pour augmenter la résistance de bâtiments existants à des contraintes dûes par exemple aux tempêtes ou aux secousses sismiques, il est connu d'augmenter la section des structures porteuses et/ou de contreventements du bâtiment par ajout de piliers ou nervures en béton, en poutrelles métalliques, ou en charpente de bois. De tels ajouts sont souvent laids et leur adaptation aux caractéristiques mécaniques, notamment l'élasticité et la dilatation du bâtiment est difficile.

Par ailleurs, l'augmentation des primes d'assurances pour le risque tempête sur des bâtiments existants s'avère une lourde charge pour les propriétaires. Et la réparation des dégâts de tempête est très dispendieuse pour les compagnies d'assurances ou les propriétaires, notamment l'État français, qui pratiquent l'auto-assurance. L'aggravation des risques de dommages est confirmée par le "Bilan 2001 des changements climatiques: Conséquences, adaptation et vulnérabilité" du Groupe d'experts intergouvernemental sur l'évolution du climat auprès de l'ONU, voir aussi "http://www.un.org/News/fr-press/docs/2002/PNUE70.doc.htm".

Le besoin est donc apparu d'un moyen discret de réduire le risque de dégâts sur les bâtiments.

Le document US-A-4 964 246 décrit un système de commande de rigidité pour une structure à rigidité variable incorporant des éléments à rigidité variable tels que des étrésillons diagonaux dans lequel la vibration de la structure causée par des forces vibratoires externes tel qu'un tremblement de terre ou le vent est atténuée en faisant varier la rigidité de la structure. La structure est équipée de capteurs, notamment de capteurs de déplacement et de capteurs de vitesse, pour détecter l'étendue de la déformation de la structure, d'un ordinateur de commande et d'unités de commande de la tension des étrésillons diagonaux pour sélectivement les tendre ou les détendre.

Le document US-A-4 964 246 décrit un procédé de stabilisation correspondant au préambule de la revendication 1 et un édifice équipé d'un système de stabilisation correspondant au préambule de la revendication 6.

La demanderesse, après avoir mené des recherches, s'est aperçue de première part qu'une grande partie des dommages aux bâtiments provenait d'efforts impulsionnels et/ou d'entrée en résonance et de deuxième part que les matériaux constitutifs d'un bâtiment sont capables de supporter pendant une durée brève et déterminée une contrainte de compression nettement supérieure à l'effort permanent maximal de compression qu'il est apte à supporter.

L'invention vise à protéger un bâtiment contre les efforts impulsionnels, notamment causés par le vent ou les tremblements de terre, en mettant à profit la capacité du bâtiment à supporter de façon transitoire un effort de compression supplémentaire.

Le procédé de stabilisation selon un aspect de l'invention est destiné à un édifice soumis à un effort impulsionnel ou vibratoire de faible durée. On détecte au moins une grandeur représentative dudit effort, et on applique audit édifice au moins une contrainte de compression ajustable supplémentaire pendant une durée déterminée pour réduire la sensibilité de l'édifice aux efforts impulsionnels ou vibratoires. La contrainte de compression ajustable supplémentaire vient s'ajouter temporairement à la contrainte de compression continue due aux caractéristiques intrinsèques du bâtiment et stabiliser l'édifice, notamment contre les accélérations horizontales et aussi verticales.

La somme de la contrainte de compression continue et de ladite contrainte de compression ajustable supplémentaire supérieure à la contrainte maximale continue admissible pour chaque élément de l'édifice.

Dans un mode de réalisation de l'invention, on détecte la vitesse du vent auquel l'édifice est soumis.

Dans un mode de réalisation de l'invention, on détecte la ou les directions du vent auquel l'édifice est soumis.

Dans un mode de réalisation de l'invention, on détecte une accélération à laquelle l'édifice est soumis. La détection peut s'effectuer sur les composantes horizontales et/ou verticales de l'accélération.

Dans un mode de réalisation de l'invention, on détecte par au moins une jauge de contrainte un effort auquel l'édifice est soumis.

L'invention propose également un édifice pourvu d'un système de stabilisation de l' édifice soumis à un effort impulsionnel ou vibratoire de faible durée. Le système comprend un moyen de détection d'au moins une grandeur représentative dudit effort, et un moyen d'application audit édifice d'au moins une contrainte de compression ajustable supplémentaire pendant une durée déterminée pour réduire la sensibilité de l'édifice aux efforts impulsionnels ou vibratoires, la somme de la contrainte de compression continue et de ladite contrainte de compression ajustable supplémentaire étant supérieure à la contrainte maximale continue admissible pour chaque élément de l'édifice.

Dans un mode de réalisation de l'invention, le moyen de détection comprend au moins un anémomètre et un gyromètre. Un anémomètre peut être disposé sur l'édifice et/ou à distance de l'édifice.

Dans un mode de réalisation de l'invention, le moyen de détection comprend un capteur sismique.

Dans un mode de réalisation de l'invention, le moyen d'application comprend au moins un actionneur apte à exercer une contrainte de compression sur au moins une portion de l'édifice. L'actionneur peut être du type vérin plat, ou système à mémoire de forme à commande thermique.

Dans un mode de réalisation de l'invention, le moyen d'application comprend un actionneur, un tirant et deux platines d'extrémité reliées l'une au tirant et l'autre au vérin, l'actionneur et le tirant étant reliés l'un à l'autre à leurs extrémités opposées aux platines. Les platines prennent appui sur une partie du bâtiment que l'on souhaite soumettre à une contrainte de compression supplémentaire temporaire. Une platine peut être intégrée à l'actionneur.

Dans un autre mode de réalisation de l'invention, les platines sont remplacées par des tirants (tiges ou câbles) scellés dans une partie du bâtiment. Les tiges ou câbles peuvent être à base de fibres, par exemple des fibres de verre ou de carbone et de résine époxyde, ou encore en acier inoxydable. Le scellement peut être effectué au moyen d'un liant du type un mortier de résine, par exemple à base de résine époxyde. Les extrémités des tirants peuvent être divergents.

Le vérin peut être de type hydraulique, électrique ou électro-hydraulique.

Dans un mode de réalisation de l'invention, le système comprend une unité de commande reliée au moyen de détection pour recevoir des données représentatives dudit effort auquel est soumis l'édifice, et au moyen d'application pour lui envoyer des instructions de mise en compression.

Dans un mode de réalisation de l'invention, le système est relié à un moyen de fourniture d'informations météorologiques et/ou sismiques. Le système peut être relié à un centre de gestion autonome en énergie, local ou distant, par voie filaire ou hertzienne, lui-même relié à un moyen de fourniture d'informations météorologiques et à un moyen de fourniture d'informations sismiques.

L'invention concerne également un édifice comprenant au moins un élément de construction, par exemple palier, mur, arc boutant et un dispositif de stabilisation associé audit élément de construction.

La présente invention sera mieux comprise à la lecture de la description détaillée de quelques modes de réalisation pris à titre d'exemples nullement limitatifs et illustrés par les dessins annexés, sur lesquels :
- la figure 1 est une vue en coupe transversale d'un bâtiment stabilisé selon un mode de réalisation de l'invention; et
- la figure 2 est une vue de détail de la figure 1.

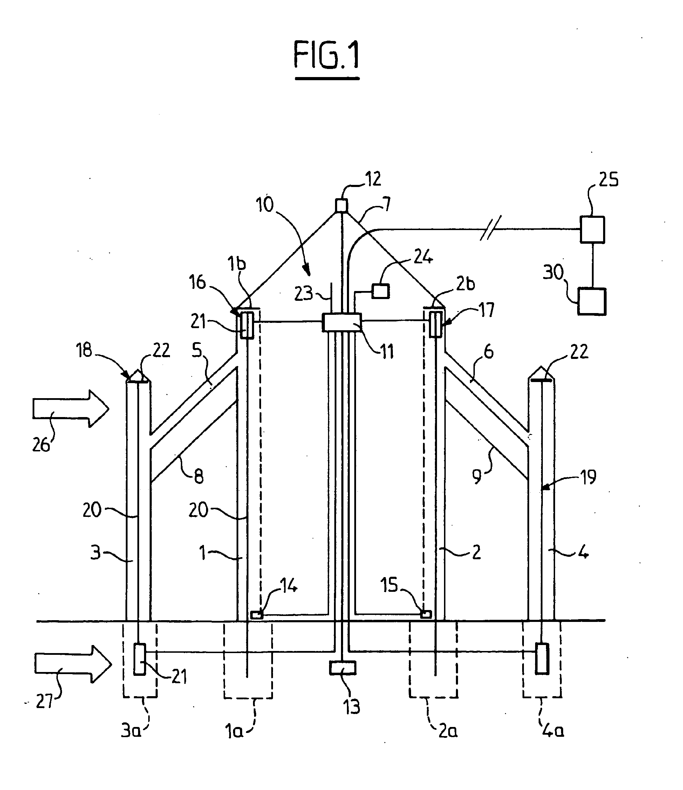

Comme on peut le voir sur la figure 1, un bâtiment du type cathédrale comprend des piliers centraux 1, 2, des piliers latéraux 3, 4, des arc-boutants 5, 6 reliant les piliers centraux 1, 2 aux piliers latéraux 3, 4, une toiture centrale 7 reposant sur le sommet des piliers centraux 1, 2 et des toitures latérales 8, 9 reposant sur les piliers centraux 1, 2, et les piliers latéraux 3, 4.

Le système de stabilisation 10 comprend une unité de commande 11, des capteurs et des actionneurs. Les capteurs comprennent un anémomètre/gyromètre 12 disposé au sommet de la toiture centrale 7, un capteur sismique 13 disposé dans le sol sous l'édifice, et des capteurs de force 14, 15, par exemples des jauges de contrainte, disposés dans le pied des piliers centraux 1, 2. Les capteurs sont reliés à l'unité de commande 11 par des liaisons électriques ou Hertziennes. Les actionneurs comprennent des sous-ensembles 16 et 17, 18 et 19 disposés respectivement dans les piliers centraux 1, 2 et les piliers latéraux 3, 4.

L'unité de commande 11 autonome en énergie est disposée dans un local technique de l'édifice.

Chaque sous-ensemble 16 à 19 comprend un tirant 20 dont une extrémité est fermement solidarisée à une extrémité du pilier correspondant, et un vérin 21 relié d'un côté à l'extrémité libre de la tige et de l'autre côté fermement solidarisé avec l'autre extrémité du pilier. La liaison tirant 20-pilier latéral 3, 4 est assurée par une platine 22 qui prend appui sur une surface du pilier perpendiculaire au tirant 20 pour assurer la transmission d'efforts verticaux de compression au pilier. La platine 22 est en position haute à proximité du sommet des piliers latéraux 3, 4.

L'extrémité du tirant 20 est solidarisée à une extrémité inférieure du pilier central 1, 2 correspondant par scellement sur une longueur de quelques dizaines de centimètres dans un trou foré dans le pilier pour loger ledit tirant. Le scellement peut être effectué au moyen d'un mortier de résine. L'extrémité du tirant 20 sera pourvue de reliefs favorisant l'adhésion du mortier. Le reste du tirant 20 est libre dans ledit trou.

Le tirant 20 peut être en acier, par exemple inoxydable, à base de fibres de verre, de carbone, ou aramides, ou en câble, ou en alliage à mémoire de forme.

Le vérin 21 est solidarisé avec l'autre extrémité du pilier 1, 2 par scellement au mortier de résine, ou par une platine non représentée.

L'installation du système de stabilisation 10 dans le bâtiment s'effectue comme suit. On ménage dans les piliers centraux 1, 2 et les piliers latéraux 3, 4, les cavités nécessaires à l'installation des tirants 20, des vérins 21 et des platines 22. A cet effet, on fore, par exemple par guidage laser, un trou longitudinal de faible diamètre, par exemple 30 mm, dans les piliers centraux 1, 2 et les piliers latéraux 3, 4. On creuse les logements des vérins 21 dans les fondations 3a, 4a des piliers latéraux 3, 4 et dans le sommet 1b, 2b des piliers centraux 1, 2. On dégage une surface plane 3b, 4b au sommet des piliers latéraux 3, 4.

On pose les tirants 20 dans les trous des piliers centraux 1, 2 et des piliers latéraux 3, 4. On pose les vérins 21 dans les fondations 3a, 4a des piliers latéraux 3, 4. La solidarisation du vérin 21 et de la fondation 3a, 4a correspondante s'effectue par appui direct d'une surface horizontale 21a du vérin 21 sur une surface horizontale correspondante de la fondation 3a, 4a, ou par scellement de la partie fixe du vérin 21, ou mieux par scellement d'une bride, non représentée, sur laquelle le vérin 21 est fixé par un ensemble vis-écrou, non représenté, permettant un démontage aisé. On accroche ensemble la partie mobile du vérin 21 et l'extrémité correspondante du tirant 20. On pose la platine 22 en la solidarisant avec l'autre extrémité du tirant 20. On peut ensuite reboucher avec du mortier ou de la pierre le sommet des piliers latéraux 3, 4 en recouvrant la platine 22.

Pour les piliers centraux 1, 2, on pose un tirant 20 que l'on scelle à son extrémité inférieure qui fait saillie dans les fondations 1a, 2a des piliers centraux 1, 2. On pose un vérin 21 et on le solidarise avec le pilier central 1, 2 comme ci-dessus. On accroche ensemble la partie mobile du vérin 21 et l'extrémité supérieure du tirant 20. À l'exception de l'extrémité inférieure scellée, le tirant 20 est libre de se déplacer par rapport aux parois du trou dans lequel elle est disposée.

On installe l'unité de commande 11 dans un endroit accessible du bâtiment et on prévoit une alimentation électrique 23 sur le secteur et une batterie de secours et/ou un accumulateur de pression hydraulique ou pneumatique 24. On relie l'unité de commande 11 aux capteurs et aux actionneurs par des liaisons électriques ou hydrauliques. Une liaison vers un centre de gestion extérieur 25 par voie filaire ou hertzienne est prévue. Le centre de gestion 25 est apte à fournir des informations météorologiques.

Le fonctionnement du système de stabilisation 10 est le suivant. Les tirants 20 sont normalement détendus et les actionneurs 21 inactifs. Le système devient actif sur détection par des capteurs et l'unité de commande 11 envoie aux vérins un ordre de se rétracter pour exercer un effort déterminé de tension sur les tirants correspondants mettant ainsi une contrainte de compression supplémentaire sur les piliers 1 à 4 et réduisant le risque d'écroulement des dits piliers 1 à 4. L'ordre est maintenu et ajusté pendant la plage de temps nécessaire. L'effort est déterminé en fonction des sollicitations enregistrées, et de la tenue des piliers à la compression. On peut par exemple appliquer une force de 100 kN. On peut aussi tenir compte de l'orientation du vent, notamment si le bâtiment offre une prise au vent, pour exercer un effort adapté à chaque pilier ou élément de structure.

Dans un mode de réalisation bien adapté aux éoliennes dont la structure peut être allégée, l'unité de commande 11 tient compte de la direction et de la pression du vent en ne mettant en compression que les piliers situés sous le vent, par exemple les piliers 1 et 3 pour un vent dirigé selon la flèche 26. On évite ainsi de mettre en compression des piliers abrités du vent. En cas de vent très violent, on peut mettre en forte compression les piliers 1 et 3 et en compression moyenne les piliers 2 et 4, et plus précisément suivant les valeurs obtenues par une modélisation de l'édifice effectuée préalablement et conduisant à une action en temps réel.

Il est encore plus intéressant que l'unité de commande 11 tienne compte aussi des informations captées par l'anémomètre/gyromètre 12. L'unité de commande 11 fonctionne alors en temps réel et la compression est mieux adaptée à la vitesse et à la ou aux directions instantanées du vent. L'unité de commande 11 envoie alors des ordres à intervalles rapprochés aux vérins 21. La compression supplémentaire exercée est plus brève et peut donc être beaucoup plus forte. La compression supplémentaire maximale admissible par le bâtiment est en effet inversement proportionnelle à la durée pendant laquelle elle est exercée.

Une contrainte de compression admissible pour une surcharge instantanée de quelques minutes, sera supérieure d'environ 20 à 22% à la contrainte de compression admissible pour une surcharge appliquée à court terme, par exemple moins d'une semaine, elle même supérieure d'environ 17% à la contrainte de compression admissible pour une surcharge appliquée à moyen terme, par exemple une semaine à six mois, elle même supérieure d'environ 10 à 12% à la contrainte de compression admissible pour une surcharge appliquée à long terme, par exemple six mois à dix ans, elle même supérieure d'environ 17% à la contrainte de compression admissible pour une surcharge permanente de plus de dix ans. Ainsi, la contrainte de compression admissible pour une surcharge instantanée pourra atteindre environ 183% de la contrainte de compression admissible pour une surcharge permanente.

L'unité de commande 11 peut aussi tenir compte des informations fournies par le capteur sismique 13 et par un centre de prévision sismique 30 distant et relié au centre de gestion extérieur 25 pour mettre en compression le bâtiment dès qu'une secousse sismique supérieure à un seuil est détectée, par exemple exerçant une force selon la flèche 27 ou dès qu'un risque sismique est estimé.

L'unité de commande 11 tient compte des informations fournies par les capteurs de force 14, 15, qui peuvent servir à tester le bon fonctionnement du système, à étalonner le comportement du bâtiment et les transferts de charge entre les piliers et les éléments de structure en fonction de la vitesse et de la direction du vent. L'unité de commande 11 peut alors établir et stocker une cartographie des compressions nécessaires pour stabiliser le bâtiment sous un vent de vitesse x et de direction ∂.

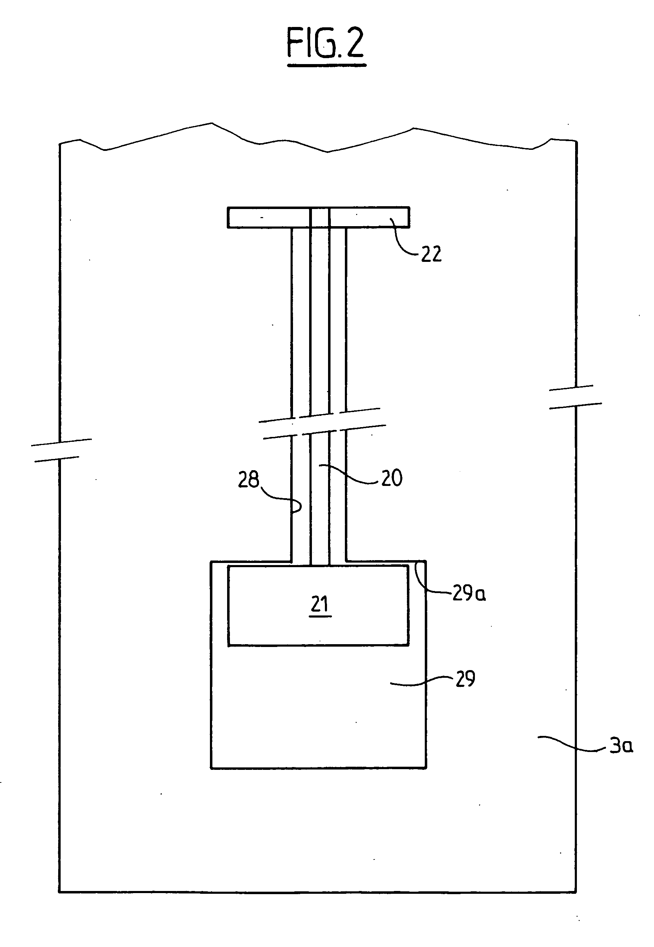

Comme on peut le voir sur la figure 2, le vérin 21 est disposé dans un logement 29 ménagé dans les fondations 3a du pilier 3 et appuie sur la surface plane supérieure 29a du logement 29.

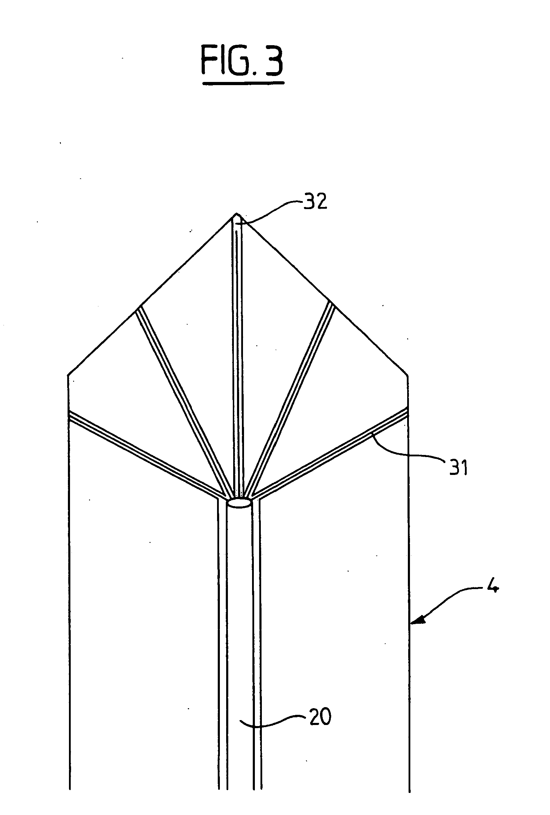

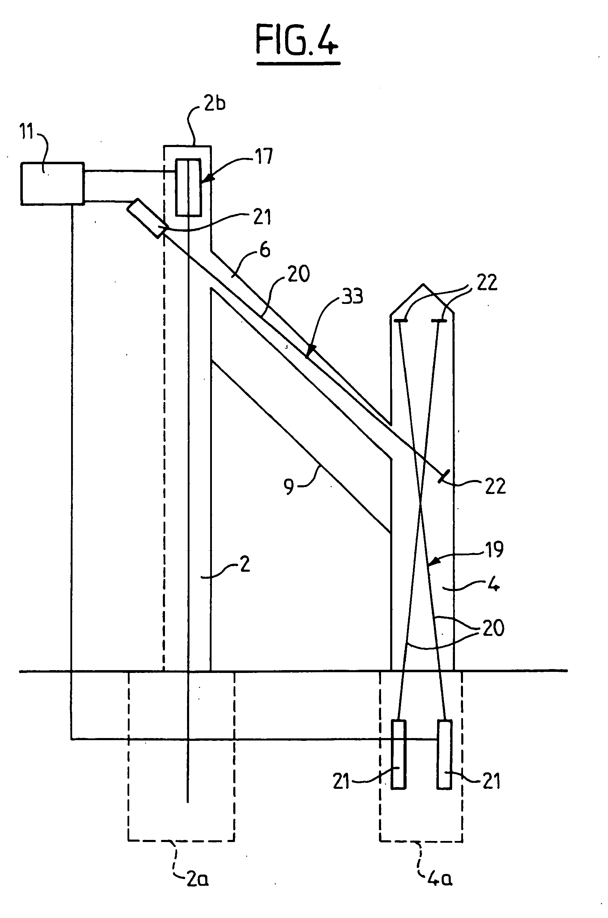

Comme on peut le voir sur la figure 3, l'extrémité d'un tirant 20 se subdivise en brins divergents 31 scellés dans des trous 32 formés dans des extrémités des piliers latéraux 3,4. On réduit ainsi les travaux à effectuer sur les extrémités des piliers 3,4. Dans le mode de réalisation illustré sur la figure 4, le pilier 4 est muni de deux tirants 20 montés en X pour pouvoir exercer un effort ayant une composante horizontale.

On peut ainsi tendre l'un ou l'autre des tirants 20, ou les deux en même temps. Le pilier 4 comprend deux vérins 21 et deux platines 22. En outre, l'arc boutant 6 est également muni d'un sous-ensemble 33 comprenant un tirant 20 logé dans ledit arc boutant 6, une platine 22 logée dans le palier 4 dans le prolongement de l'arc boutant 6, et un vérin 21 disposé sur le pilier 2 à l'autre extrémité du tirant 20.

Grâce à l'invention, on obtient un bâtiment stabilisé dynamiquement de façon économique en préservant les surfaces et volumes présentant un intérêt historique, artistique, culturel, etc. L'invention est parfaitement adaptée à tout bâtiment ancien ou récent et permet par sa réactivité d'éviter ou au moins de réduire considérablement le taux et l'étendue des sinistres en cas de tempête.

## Revendications

1. Procédé de stabilisation d'un édifice soumis à un effort impulsionnel ou vibratoire de faible durée, dans lequel on détecte au moins une grandeur représentative dudit effort, on applique audit édifice au moins une contrainte de compression ajustable supplémentaire pendant une durée déterminée pour réduire la sensibilité de l'édifice aux efforts impulsionnels ou vibratoires, **caractérisé en ce que** la somme de la contrainte de compression continue et de ladite contrainte de compression ajustable supplémentaire est supérieure à la contrainte maximale continue admissible sur chaque élément de l'édifice.

2. Procédé selon l'une quelconque des revendications précédentes, dans lequel on détecte une accélération à laquelle l'édifice est soumis.

3. Procédé selon l'une quelconque des revendications précédentes, dans lequel on détecte par au moins une jauge de contrainte un effort auquel l'édifice est soumis.

4. Procédé selon l'une quelconque des revendications précédentes, dans lequel on détecte la direction du vent auquel l'édifice est soumis.

5. Procédé selon l'une quelconque des revendications précédentes, dans lequel on détecte la vitesse du vent auquel l'édifice est soumis.

6. Edifice équipe d'un système de stabilisation de l'édifice pour la mise en oeuvre du procédé de stabilisation d'un édifice soumis d'un effort impulsionnel ou vibratoire de faible durée selon l'une quelconque des revendications précédentes **caractérisé par le fait que** le système comprend un moyen de détection d'au moins une grandeur représentative dudit effort, et un moyen d'application audit édifice d'au moins une contrainte de compression ajustable supplémentaire pendant une durée déterminée pour réduire la sensibilité de l'édifice aux efforts impulsionnels ou vibratoires, la somme de la contrainte de compression continue et de ladite contrainte de compression ajustable supplémentaire étant supérieure à la contrainte maximale continue admissible sur chaque élément de l'édifice.

7. Edifice selon la revendication 6, **caractérisé par le fait que** le moyen d'application comprend au moins un vérin (21) apte à exercer une contrainte de compression sur au moins une portion de l'édifice.

8. Edifice selon la revendication 7, **caractérisé par le fait que** le moyen de détection comprend un anémomètre disposé sur l'édifice.

9. Edifice selon la revendication 7, **caractérisé par le fait que** le moyen de détection comprend un anémomètre disposé à distance de l'édifice.

10. Edifice selon l'une quelconque des revendications 6 à 9, **caractérisé par le fait que** le moyen de détection comprend un capteur sismique (13).

11. Edifice selon l'une quelconque des revendications 6 à 10, **caractérisé par le fait que** le moyen de détection comprend un anémomètre et un gyromètre (12).

12. Edifice selon l'une quelconque des revendications 6 à 11, **caractérisé par le fait qu'**il comprend une unité de commande (11) reliée au moyen de détection pour recevoir des données représentatives dudit effort auquel est soumis l'édifice et au moyen d'application pour lui envoyer des instructions de mise en compression.

## Claims

1. Method of stabilizing an edifice subjected to an impulsive or vibratory force of short duration, in which at least one variable representing the said force is detected, and at least one additional adjustable compressive stress is applied to the said edifice for a given duration in order to reduce the sensitivity of the edifice to the impulsive or vibratory forces, **characterized in that** the sum of the continuous compressive stress and of the said additional adjustable compressive stress is greater than the maximum continuous stress admissible on each component of the edifice.

2. Method according to the preceding claim, in which an acceleration to which the edifice is subjected is detected.

3. Method according to either one of the preceding claims, in which at least one strain gauge is used to detect a force to which the edifice is subjected.

4. Method according to any one of the preceding claims, in which the direction of the wind to which the edifice is subjected is detected.

5. Method according to any one of the preceding claims, in which the speed of the wind to which the edifice is subjected is detected.

6. Edifice equipped with a system for stabilizing the edifice for the implementation of the method of stabilizing an edifice subjected to an impulsive or vibratory force of short duration according to any one of the preceding claims, **characterized in that** the system comprises a means for detecting at least one variable representing the said force, and a means for applying to the said edifice at least one additional adjustable compressive stress for a given duration in order to reduce the sensitivity of the edifice to the impulsive or vibratory forces, the sum of the continuous compressive stress and of the said additional adjustable compressive stress being greater than the maximum continuous stress admissible on each component of the edifice.

7. Edifice according to Claim 6, **characterized in that** the application means comprises at least one actuating cylinder (21) capable of exerting a compressive stress on at least a portion of the edifice.

8. Edifice according to Claim 7, **characterized in that** the detection means comprises an anemometer arranged on the edifice.

9. Edifice according to Claim 7, **characterized in that** the detection means comprises an anemometer arranged at a distance from the edifice.

10. Edifice according to any one of Claims 6 to 9, **characterized in that** the detection means comprises a seismic sensor (13).

11. Edifice according to any one of Claims 6 to 10, **characterized in that** the detection means comprises an anemometer and a gyrometer (12).

12. Edifice according to any one of Claims 6 to 11, **characterized in that** it comprises a control unit (11) which is connected to the detection means in order to receive data representing the said force to which the edifice is subjected, and which is connected to the application means in order to send it instructions to apply compression.

## Patentansprüche

1. Verfahren zum Stabilisieren eines Bauwerks, das einer stoßartigen oder kurzzeitig pulsierenden Kraft ausgesetzt ist, bei dem mindestens eine Größe, die für die Kraft repräsentativ ist, erfasst wird, das Bauwerk eine festgelegte Zeit lang mit mindestens einer zusätzlichen, einstellbaren Druckspannung beaufschlagt wird, um die Empfindlichkeit des Bauwerks gegenüber stoßartigen oder pulsierenden Kräften herabzusetzen, **dadurch gekennzeichnet, dass** die Summe aus der ständigen Druckspannung und der zusätzlichen, einstellbaren Druckspannung größer als die für jedes Element des Bauwerks zulässige ständige Maximalspannung ist.

2. Verfahren nach Anspruch 1, wobei die Beschleunigung erfasst wird, der das Bauwerk ausgesetzt ist.

3. Verfahren nach einem der vorhergehenden Ansprüche, wobei durch mindestens einen Dehnungsmessstreifen die Kraft erfasst wird, der das Bauwerk ausgesetzt ist.

4. Verfahren nach einem der vorhergehenden Ansprüche, wobei die Richtung des Windes erfasst wird, dem das Bauwerk ausgesetzt ist.

5. Verfahren nach einem der vorhergehenden Ansprüche, wobei die Geschwindigkeit des Windes erfasst wird, dem das Bauwerk ausgesetzt ist.

6. Bauwerk, das mit einem Bauwerkstabilisierungssystem für die Durchführung des Verfahrens zum Stabilisieren eines Bauwerks, das einer stoßartigen oder kurzzeitig pulsierenden Kraft ausgesetzt ist, nach einem der vorhergehenden Ansprüche ausgestattet ist, **dadurch gekennzeichnet, dass** das System ein Mittel zum Erfassen mindestens einer Größe, die für die Kraft repräsentativ ist, und ein Mittel, um dieses Bauwerk eine festgelegte Zeit lang mit mindestens einer zusätzlichen, einstellbaren Druckspannung zu beaufschlagen, um die Empfindlichkeit des Bauwerks gegenüber stoßartigen oder pulsierenden Kräften herabzusetzen, wobei die Summe aus der ständigen Druckspannung und der zusätzlichen, einstellbaren Druckspannung größer als die für jedes Element des Bauwerks zulässige ständige Maximalspannung ist, umfasst.

7. Bauwerk nach Anspruch 6, **dadurch gekennzeichnet, dass** das Beaufschlagungsmittel mindestens einen Stellantrieb (21) umfasst, der im Stande ist, eine Druckspannung auf mindestens einen Teil des Bauwerks auszuüben.

8. Bauwerk nach Anspruch 7, **dadurch gekennzeichnet, dass** das Erfassungsmittel ein auf dem Bauwerk angeordnetes Anemometer umfasst.

9. Bauwerk nach Anspruch 7, **dadurch gekennzeichnet, dass** das Erfassungsmittel ein von dem Bauwerk entfernt angeordnetes Anemometer umfasst.

10. Bauwerk nach einem der Ansprüche 6 bis 9, **dadurch gekennzeichnet, dass** das Erfassungsmittel einen seismischen Sensor (13) umfasst.

11. Bauwerk nach einem der Ansprüche 6 bis 10, **dadurch gekennzeichnet, dass** das Erfassungsmittel ein Anemometer und ein Gyrometer (12) umfasst.

12. Bauwerk nach einem der Ansprüche 6 bis 11, **dadurch gekennzeichnet, dass** es eine Steuereinheit (11) umfasst, die mit dem Erfassungsmittel verbunden ist, um Daten zu empfangen, die für die Kraft, der das Bauwerk ausgesetzt ist, repräsentativ sind, und mit dem Beaufschlagungsmittel verbunden ist, um ihm Befehle zur Druckbeaufschlagung zu senden.
